# EUROPÄISCHE PATENTSCHRIFT

(11) **EP 1 465 002 B1**
(45) Veröffentlichungstag und Bekanntmachung des Hinweises auf die Patenterteilung: **28.05.2008**
(21) Anmeldenummer: 04007927.9
(22) Anmeldetag: 01.04.2004
(51) Int. Cl.: G02B 23/12, G02B 5/20, G01S 17/93

(54) **Kamera mit Infrarot Filter zur Verbesserung der Sicht in einem Kraftfahrzeug**
Camera with infrared filter for improving the visibility in a motor vehicle
Caméra avec filtre infrarouge pour améliorer la visibilité dans un véhicule automobile

(30) Priorität: 04.04.2003 DE 10315741
(43) Veröffentlichungstag der Anmeldung: 06.10.2004
(73) Patentinhaber: Daimler AG, 70327 Stuttgart (DE)
(72) Erfinder: Moisel, Jörg, 89233 Neu-Ulm (DE)

(56) Entgegenhaltungen:
- EP-A- 0 595 205
- EP-A- 0 830 985
- EP-A- 1 275 981
- FR-A- 2 661 268
- US-A- 6 150 930

## Beschreibung

Die Erfindung betrifft eine Vorrichtung zur Verbesserung der Sicht in einem Kraftfahrzeug nach dem Oberbegriff des Patentanspruchs 1.

Eine solche Vorrichtung ist aus der DE 41 07 850 A1 und aus der DE 41 37 551 A1 bekannt. Darin ist eine Strahlungsquelle zur Beleuchtung der Fahrzeugumgebung mit infraroter Strahlung, eine infrarotempfindliche Kamera zur Erfassung wenigstens eines Teiles der beleuchteten Fahrzeugumgebung und eine Anzeige zur Darstellung der durch die Kamera erfassten Bildinformationen gezeigt. Zusätzlich ist der infrarotempfindlichen Kamera ein IR-Filter zugeordnet, der für die infrarote Strahlung der Strahlungsquelle durchlässig ist, während er für das restliche infrarote Strahlungsspektrum bzw. das sichtbare Licht durch seine hohe Sperrwirkung undurchlässig. Hierdurch gelingt es, das Tageslicht wie auch das normale Scheinwerferlicht entgegenkommender Fahrzeuge völlig oder sehr stark zu bedämpfen und eine Störung der bei einer Wellenlänge von über 780 nm, einen Transmissionsgrad von etwa 98 %, wohingegen er im Bereich des sichtbaren Lichts einen typischen Transmissionsgrad von etwa 10⁻⁵ aufweist. Aus der DE 41 37 551 A1 ist die Verwendung eines IR-Filter mit über seine Fläche variierendem Transmissionsgrad im Infrarotstrahlungsbereich bekannt, wohingegen er das sichtbare Licht vollständig bedämpft.

Aus den Druckschriften FR 2 661 268, EP 1 275 981, EP 0 595 205 und US 6,150,930 sind weitere Kameras mit IR-Filter bekannt.

Der Erfindung liegt die Aufgabe zugrunde, eine Vorrichtung zur Verbesserung der Sicht in einem Kraftfahrzeug anzugeben, welche mit einfachen Mitteln ein Erkennen von Verkehrsampeln, Bremsleuchten oder Blinkleuchten anderer Verkehrsteilnehmer auf ausreichend verlässliche Weise ermöglicht.

Diese Aufgabe wird gelöst durch eine Vorrichtung zur Verbesserung der Sicht in einem Kraftfahrzeug mit den Merkmalen des Patentanspruchs 1.

Vorteilhafte Weiterbildungen der Erfindung sind Gegenstand der Unteransprüche.

Die erfindungsgemäße Vorrichtung zur Verbesserung der Sicht in einem Fahrzeug zeigt einen IR-Filter, welcher der infrarotempfindlichen Kamera zugeordnet ist und welcher in räumliche Bereiche aufgeteilt ist, wobei er in diesen Bereichen unterschiedliche Transmissionseigenschaften aufweist. Durch diese unterschiedlichen Transmissionseigenschaften ist gewährleistet, dass wenigstens in einem Bereich die typische IR-Filter-Sperrwirkung für Licht außerhalb des Infrarotstrahlungsbereiches und wohingegen in dem Frequenzbereich der IR-Strahlung ein hoher Transmissionsgrad in der Größenordnung von 100 % gegeben ist. In entsprechender Weise existiert wenigstens ein davon getrennter räumlicher Bereich des Filters, welcher sich in den Transmissionseigenschaften dahingehend unterscheidet, dass er nicht diese spezifische Sperrwirkung gegenüber dem sichtbaren Licht aufweist, wie es der wenigstens eine andere Bereich des IR-Filters zeigt.

Es hat sich besonders bewährt, den räumlichen Bereich des IR-Filters mit einer geringeren Sperrwirkung für das sichtbare Licht mit einem Transmissionsgrad von etwa oder größer 10⁻³ auszubilden, wohingegen bevorzugt der Transmissionsgrad für sichtbares Licht des zweiten, anderen Bereiches mit hoher Sperrwirkung im Bereich von 10⁻⁵ oder kleiner gewählt ist. Durch diese differenzierte räumliche Gliederung des einen einzigen IR-Filters gelingt es, eine sehr einfache Vorrichtung zur Verbesserung der Sicht in einem Fahrzeug zu realisieren, welche es ermöglicht, wesentliche Informationen aus der Umgebung des Fahrzeuges, wie beispielsweise Blinkleuchten oder Bremsleuchten vorausfahrender Fahrzeuge oder Ampeln oder gegebenenfalls andere nicht aktiv selbstleuchtende Verkehrszeichen zu erfassen und dem Fahrzeugbenutzer zur Kenntnis zu geben. Durch diese Ausbildung und Verwendung des räumlich differenziert gestalteten IR-Filters gelingt es, notwendige Informationen für das sichere Führen des Fahrzeuges durch den Benutzer auf einfache und sichere Weise zur Verfügung zu stellen. Dadurch gelingt es das Risiko eines Unfalles merklich zu senken.

Dabei ist der wenigstens eine Bereich, welcher für sichtbares Licht oder Teile davon nicht so stark sperrend ist, wie der typische IR-Filter, welcher einen Transmissionsgrad über 10⁻³ oder in der Größenordnung von 10⁻³ zeigt, nahezu durchlässig ausgebildet. Dies führt dazu, dass der Transmissionsgrad für diesen Bereich in der Größenordnung von 100 %, beispielsweise bei 60 oder 70 %, liegt. Dies kann insbesondere dadurch realisiert werden, dass der erfindungsgemäße IR-Filter ein Loch bzw. eine Ausnehmung aufweist bzw. eine Aussparung in der Beschichtung des IR-Filters aufweist, die eine erhebliche Erhöhung des Transmissionsgrades für sichtbares Licht oder für Teile des sichtbaren Lichtes, insbesondere bis in die Größenordnung von 100 % bewirkt. Durch diese Ausbildung des IR-Filters mit Loch, Ausnehmung oder Aussparung ist ein sehr einfacher und kostengünstiger Filter für die erfindungsgemäße Vorrichtung zur Verbesserung der Sicht in einem Kraftfahrzeug geschaffen.

Als Strahlungsquelle zur Beleuchtung der Fahrzeugumgebung mit infraroter Strahlung haben sich Fahrzeugscheinwerfer unter Verwendung von Halogenlichtquellen, Infrarot-LED-Strahlungsquellen oder auch Infrarot-Laserstrahlungsquellen bewährt. Die Infrarot-Strahlungsquellen bzw. die Infrarot-Laserstrahlungsquellen zeigen dabei ein sehr schmalbandiges Emissionsspektrum im IR-Strahlungsbereich und ermöglichen dadurch, auf zusätzliche IR-Filter im Bereich der Strahlungslichtquelle zu verzichten. Diese beispielsweise bei einem Halogenscheinwerfer, welcher sichtbares Licht und IR-Strahlung emittiert, eingesetzte IR-Filter haben die Ausstrahlung von sichtbarem Licht in Ergänzung zu den zusätzlich vorhandenen Fahrlichtscheinwerfern zu verhindern und dadurch eine möglichst eindeutige Beleuchtungssituation der Umgebung zu schaffen. Dies ermöglicht eine besonders wirkungsvolles Erfassung und Auswertung der erfassen Bildinformationen durch die infrarotempfindliche Kamera.

Die infrarotempfindliche Kamera ist bevorzugterweise als CCD-oder als CMOS-Kamera realisiert. Die bevorzugten CMOS-Kameras zeigen einen nichtlinearen logarithmischen Empfindlichkeitsverlauf, was die der Kamera nachfolgenden Bildauswertung der Bilddaten mit dem extremem Dynamikumfang wesentlich erleichtert. Die CCD-Kameras zeigen einen sehr kompakten robusten, kostengünstigen Aufbau.

Die durch die infrarotempfindliche Kamera erfassten Bildinformationen werden einer Bildverarbeitung unterzogen, die zumindest eine Anpassung an die Anzeige enthält. Darüber hinaus sind insbesondere Funktionalitäten, wie Anpassung des Dynamikumfangs, Selektion bestimmter Bildinformationen, Hervorhebung bestimmter Bildinformationen, Klassifizierungen der erfassten Bildinformationen oder auch nur Farbkorrekturen oder Helligkeitskorrekturen durch die anschließende Bildverarbeitung möglich. Die von der infrarotempfindlichen Kamera erfassten Bildinformationen werden nach der Bildverarbeitung in einer Anzeige, welches typischerweise als flächiges TFT- oder LCD-Display oder auch als Headup-Display realisiert ist, dem Fahrer in seinem Sichtbereich zur Verfügung gestellt.

Der verwendete IR-Filter wird bevorzugt als ein Glasfilter realisiert, der durch seine Glasmischung bzw. durch seine Beschichtungen die gewünschten Filtereigenschaften, insbesondere seine räumlich differenzierte Transmissionseigenschaften aufweist. Dieser Filter wird bevorzugt als runder Filter direkt mit dem Objektiv der infrarotempfindlichen Kamera verbunden, indem er auf das Kameraobjektiv aufgesteckt, aufgeschraubt oder mit einem Bajonettverschluß gesichert wird. Darüber hinaus sind auch andere, nicht unter den Schutzumfang des Anspruchs 1 fallende Ausbildungen des einen einzigen IR-Filters möglich, der der infrarotempfindlichen Kamera so zugeordnet ist, dass er in dem Strahlengang des durch die infrarotempfindliche Kamera erfassten Umgebungsbereiches angeordnet ist. Durch die Verwendung des genau einen Filters ist eine sehr einfache, robuste Anordnung aus Filter mit Kamera in einer Vorrichtung zur Verbesserung der Sicht in einem Fahrzeug geschaffen.

Es hat sich besonders bewährt, den oder die Bereiche mit einem höheren Transmissionsgrad für sichtbares Licht oder Teile davon im Randbereich anzuordnen, was mit einer einfachen Herstellung verbunden ist. Dies führt zu einem der kostengünstigen und spezifisch herzustellenden IR-Filter mit den gewünschten Eigenschaften. Insbesondere lassen sich die Gesamt-Filtereigenschaften durch die Wahl der Größe der oder des genannten Bereiches im Randbereich des Filters besonders spezifisch ausbilden.

Alternativ hierzu hat es sich bewährt, den Bereich mit einem relativ hohen Transmissionsgrad für sichtbares Licht oder Teile davon im Zentralbereich des Filters anzuordnen, da gerade in diesem Bereich die optischen Abbildungseigenschaften besonders gut sind und die gewünschten zusätzlichen Bildinformationen, welche als sichtbares Licht übertragen werden, beispielsweise Lichtzeichen wie Ampeln, Bremslichter, Blinklichter usw. von besonderer sicherheitsrelevanter Funktion bzw. Bedeutung für den Fahrer sind, gut erfasst werden können. Durch die Anordnung des oder der Bereiche im Zentralbereich des IR-Filters ist gewährleistet, dass eine deutliche Darstellung und damit sichere Erfassung der sicherheitsrelevanten Informationen durch den Fahrer ermöglicht ist und dadurch die Verkehrssicherheit erhöht werden kann.

Es hat sich besonders bewährt, den Bereich des IR-Filters bzw. die Bereiche des IR-Filters so auszubilden, dass seine Fläche oder die Summe ihrer Flächen typisch nicht mehr als 25 % der Fläche des IR-Filters, welcher im Strahlengang des Erfassungsbereiches der infrarotempfindlichen Kamera angeordnet ist, umfasst. Vorzugsweise wird die Fläche des Bereiches bzw. die Summe der Flächen der Bereiche nicht unter 1 % der vorgenannten Fläche des IR-Filters gewählt, so dass einerseits eine ausreichende Bedämpfung störender Lichtquellen und damit eine sichere und einfache Bildverarbeitung zur Darstellung der erfassten Bildinformationen möglich ist. Ein Übersteuern und gegebenenfalls ein Blenden des Benutzers durch die Scheinwerfer entgegenkommender Fahrzeuge ist damit weitgehend ausgeschlossen. Dennoch ist in ausreichendem Maße sichergestellt, dass genügend viele Bildinformationen durch sichtbares Licht erfasst wird, so dass die Wiedergabe von Verkehrszeichen, wie Ampeln oder Fahrzeugsignale wie Blinklichter in ausreichendem Maße sichergestellt ist. Dieses maximale bzw. minimale Flächenverhältnis zwischen Bereichen starken Bedämpfung des sichtbaren Lichtes beispielsweise mit einem Transmissionsgrad von unter oder deutlich unter 10⁻⁵ und den Bereichen von schwacher oder nur sehr geringer Bedämpfung des sichtbaren Lichtes beispielsweise von einem Transmissionsgrad von 10⁻² oder in der Größenordnung von 60 % ist eine sehr wirkungsvolle und sichere Vorrichtung zur Verbesserung der Sicht in einem Fahrzeug geschaffen.

Es hat sich als besonders vorteilhaft erwiesen, den wenigstens einen Bereich des IR-Filters mit geringer Bedämpfung des sichtbaren Lichtes bzw. Teile des sichtbaren Lichtes in der Gestalt eines Sternes (insbesondere eines 3 oder 5-zackigen Sternes), eines Kreise, eines Viereckes, eines Kreissegmentes oder Kreisabschnittes oder eines Ringes auszubilden. Diese Gestaltungen des Bereiches lassen sich fertigungstechnisch sehr einfach und sicher realisieren und damit die gewünschten optischen Eigenschaften des Filters schaffen, um damit die bestmögliche Wirkung des IR-Filters in einer Vorrichtung zur Verbesserung der Sicht in einem Kraftfahrzeug zu erreichen. Dabei hat es sich besonders bewährt, die Gestalt eines Kreises bei der Anordnung des Bereiches im Zentralbereich des IR-Filters zu verwenden, wohingegen es sich besonders bewährt hat, die Gestalt eines Ringes im Fall der Anordnung des Bereiches im Randbereich bzw. die Gestalt eines Kreisabschnittes ebenso im Randbereich des IR-Filters anzuordnen. Diese Ausbildungen lassen sich in ausgesprochen einfacher und sicherer Weise fertigungstechnisch herstellen. Beispielsweise kann die Beschichtung im Randbereich des IR-Filters, beispielsweise des kreisrunden IR-Filters in einem bestimmten Abstand abgetragen oder gar mit aufgebracht werden, so dass auf einfache Weise eine ringförmige Ausbildung des Bereiches mit erhöhter Durchlässigkeit für sichtbares Licht oder Teile davon, geschaffen ist.

Im folgenden wird die Erfindung anhand einer beispielhaften Ausführung einer Vorrichtung zur Verbesserung der Sicht in einem Kraftfahrzeug bzw. IR-Filter für eine solche näher erläutert.
- Figur 1: zeigt den schematischen Aufbau einer erfindungsgemäßen beispielhaften Vorrichtung zur Verbesserung der Sicht in einem Kraftfahrzeug,
- **Figur 2**: zeigt eine beispielhafte Ausbildung eines IR-Filter,
- **Figur 3**: zeigt eine andere beispielhafte Ausbildung eines IR-Filter und
- **Figur 4**: zeigt eine weitere Ausbildung eines beispielhaften IR-Filters für eine erfindungsgemäße Vorrichtung zur Verbesserung der Sicht in einem Kraftfahrzeug.

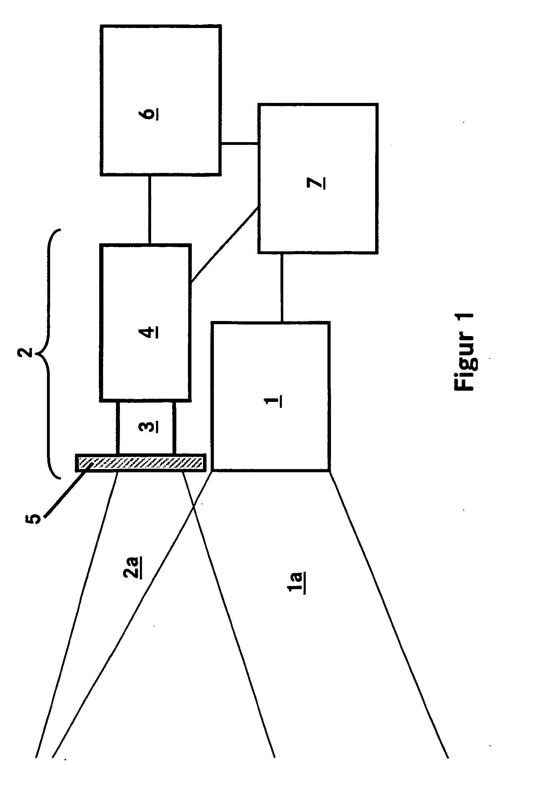

Figur 1 zeigt in einer schematischen Darstellung das Zusammenwirken bzw. den Aufbau einer erfindungsgemäßen Vorrichtung zur Verbesserung der Sicht in einem Kraftfahrzeug.

Mit einer Infrarotstrahlungsquelle 1, welche als Infrarot-LED-Scheinwerfer ausgebildet ist, wird die Fahrzeugumgebung mit infraroter Strahlung beleuchtet. Der mit infraroter Strahlung beleuchtete Bereich 1a wird zumindest teilweise durch die infrarotempfindliche Kamera 2 erfasst. Der Erfassungsbereich der infrarotempfindlichen Kamera 2a ist hier nicht deckungsgleich mit dem Beleuchtungsbereich 1a der infraroten Strahlungsquelle 1. Die durch die Strahlungsquelle 1 beleuchteten Elemente der Umgebung, welche sich in dem Erfassungsbereich 2a der Kamera 2 befinden, sowie Elemente, die sich nicht in dem beleuchteten aber dennoch im Erfassungsbereich der Kamera 2a befinden, werden durch die infrarotempfindliche Kamera 1 erfasst. Diese Erfassung erfolgt mit Hilfe des Objektives 3 und der Bildverarbeitungseinheit 4 in der Kamera 2.

Darüber hinaus ist das Objektiv 3 mit einem IR-Filter 5 versehen, der Bereiche aufweist, die für das sichtbare Licht in der Art eines gängigen IR-Filters sehr stark bedämpft sind und mit Bereichen versehen, die im Gegensatz dazu erfindungsgemäß nur wenig bedämpft sind. Dementsprechend werden dem Objektiv 3 und der Bildverarbeitungseinheit 4 der Kamera 2 nicht nur Bildsignale, welche mittels infraroter Strahlung übertragen werden, zugeführt, sondern darüber hinaus auch Bildsignale von nennenswerter Stärke, welche mit sichtbarem Licht übertragen werden. Durch die Zuführung dieser beiden Arten von Bildinformationen ist sichergestellt, dass sowohl die mit IR-Strahlung, das heißt einerseits durch die IR-Strahlungsquelle 1 bestrahlten Elemente der Umgebung wie auch die passiv leuchtenden, beispielsweise Wärmestrahlung ausstrahlenden Elemente sicher anhand ihrer IR-Strahlung erfasst und dargestellt werden können, wie auch die Elemente, welche sichtbares Licht in ausreichender Stärke emittieren. Ein vollständiges Unterdrücken des sichtbaren Lichtes, wie beim Stand der Technik, ist erfindungsgemäß nicht realisiert.

Dadurch gelingt es beispielsweise, vorausschauende Fahrzeuge mit ihren Bremsleuchten oder auch Blinkerleuchten oder auch grüne Ampeln oder auch ein Blaulicht von Einsatzfahrzeugen sicher durch die Kamera 2 mit dem IR-Filter 5, dem Objektiv 3 und der Bildverarbeitungseinheit 4 zu erfassen und die auf Basis des sichtbaren Lichts übertragenen und erfassten Bildinformationen sowie die auf Basis der infraroten Strahlung übertragenen und erfassten Bildinformationen in der der Kamera 2 zugeordneten Anzeige 6 sicher darzustellen und dem Fahrzeugführer zur Aufnahme zur Verfügung zu stellen.

Die Strahlungsquelle 1, die Kamera 2 und die Anzeige 6 sind mit einer Steuereinheit 7 der Vorrichtung zur Verbesserung der Sicht in einem Kraftfahrzeug verbunden, welche die einzelnen Komponenten der Vorrichtung zielgerichtet ein-, ausschaltet bzw. steuert. Dabei ist die Steuerung so ausgeführt, dass eine Gefährdung der Umgebung beispielsweise durch die Beleuchtung mittels der Infrarot-Strahlungsquelle weitgehend ausgeschlossen.

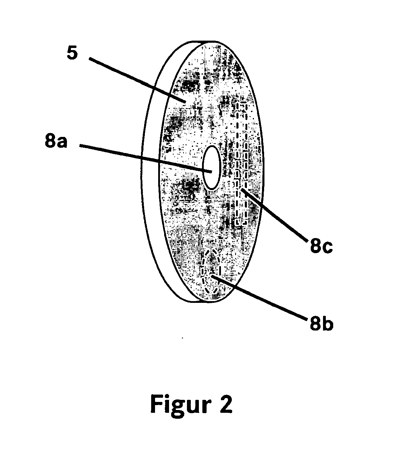

In Figur 2 ist eine beispielhafte Ausbildung des IR-Filters dargestellt. Der Filter ist in Form einer Scheibe realisiert, die auf ihrer gesamten Fläche einen Transmissionsgrad von deutlich unter 10⁻⁴ für sichtbares Licht aufweist, wohingegen er für die infrarote Strahle deutlich größer, insbesondere im Bereich von 100 % liegt. Diese Transmissionseigenschaften sind in drei Bereichen 8a, 8b, 8c nicht gegeben. In diesen Bereichen 8a, 8b, 8c ist der Transmissionsgrad für wesentliche Teile des sichtbaren Lichts deutlich erhöht und liegt im Bereich 10⁻². Der Bereich 8a ist in der Mitte im Zentralbereich des kreisförmigen bzw. scheibenförmigen Filters 5 angeordnet. Durch die kreisförmige Ausbildung des Bereiches 8a im Zentralbereich ist sichergestellt, dass eine optisch verlässliche, insbesondere scharfe Darstellung bzw. optische Abbildung der Gegenstände im Erfassungsbereich 2a, welche sichtbares Licht aussenden oder reflektieren, gegeben, so dass die Kamera 2 diese Gegenstände sehr gut, verlässlich erfasst und auf der Anzeige 6 zur Wiedergabe bringt.

Die Anordnung einer kreisförmigen Ausnehmung entsprechend dem Bereich 8a in dem Zentralbereich des IR-Filters 5 hat die Wirkung einer wellenlängenselektiven Blende, die es ermöglicht, im sichtbaren Bereich entsprechend einer gering geöffneten Lochblende eine sehr gute Übertragungs-Abbildungseigenschaft zu gewährleisten, welche es ermöglicht, auf eine achromatische Korrektur des Objektives der infrarotempfindlichen Kamera insbesondere für das sichtbare Licht zu verzichten. Der kreisförmige Bereich 8a wirkt wie eine Lochblende, welche aufgrund Ihres geringen Durchmessers einen vergrößerten Schärfentiefebereich bewirkt. Dabei wird der Durchmesser um so kleiner gewählt, je größer der Transmissionsgrad des Bereiches für das sichtbare Licht oder Teile davon ist. Hierdurch gelingt es, eine kostengünstige einfache Anordnung der Vorrichtung zur Verbesserung der Sicht in einem Kraftfahrzeug zu schaffen. Der sonstige IR-Filterbereich, welcher die wesentliche Fläche des IR-Filters 5 umfasst, zeigt diese besondere Blendwirkung nicht, weshalb das Objektiv der IR-Kamera nicht speziell auf das sichtbare Licht, sondern auf die infrarote Strahlung optimiert gestaltet werden kann, was wiederum zu einer Kostenreduktion der infrarotempfindlichen Kamera relativ zu einer gewöhnlichen Kamera, welche sowohl für infrarote Strahlung wie auch für sichtbares Licht geeignet ist und in beiden Frequenzbereichen eine sehr gute Abbildungseigenschaft zeigt.

Durch die Ausbildung der zusätzlichen Bereiche 8b, 8c im Randbereich des scheibenförmigen IR-Filters einmal in kreisförmiger Gestalt (8b) und einmal in rechteckiger Gestalt (8c) ist sichergestellt, dass die Gesamtfläche der Bereiche 8a, 8b, 8c einen beachtlichen Anteil der gesamten wirksamen Filterfläche des IR-Filters 5 umfasst und dadurch eine ausreichende und sichere Wiedergabe von Blinkleuchten, Ampeln und ähnliches gegeben ist und diese nicht durch die Sperrwirkung des restlichen IR-Filters unterdrückt werden. Die Gesamtfläche der Bereiche 8a, 8b, 8c beträgt im Verhältnis zu der Gesamtfläche des IR-Filters etwa 15 %. Die Bereiche 8b, 8c lassen sich fertigungstechnisch sehr einfach herstellen, indem ausgehend vom Rand diese Bereiche 8b, 8b des IR-Filters 5 in ihren Oberflächeneigenschaften verändert werden und dadurch der Transmissionsgrad für wesentliche Teile des sichtbaren Lichtes beispielsweise im grünen Bereich erheblich angehoben wird. Diese Veränderung der Oberflächeneigenschaften ist durch die nachträgliche Beseitigung der filteraktiven Oberflächenbeschichtungen gegeben.

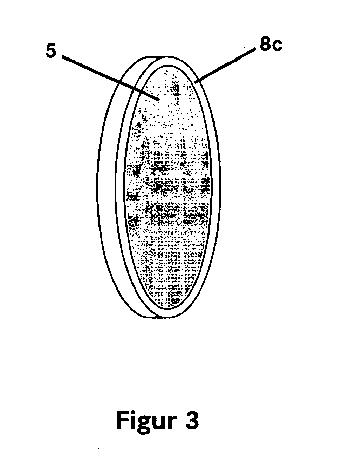

In Figur 3 ist eine alternative Ausbildung des Filters 5 dargestellt. Der Randbereich 8c des IR-Filters 5 ist als ringförmiger Bereich ausgebildet, der für sichtbares Licht stärker durchlässig ist als der Zentralbereich des Filters 5, welcher für sichtbares Licht eine sperrende Wirkung, das heißt einen Transmissionsgrad von deutlich unter 10⁻⁵ aufweist. Der ringförmige Bereich 8d wird dadurch realisiert, dass die Oberflächenbeschichtungen des Filters 5 im Randbereich entfernt werden und dadurch ein Durchlassbereich für sichtbares Licht mit einem Transmissionsgrad von etwa 70 % geschaffen ist. Durch diese Ausbildung ist ein einfach realisierter IR-Filter 5 mit den besonderen Eigenschaften geschaffen, die in einer Vorrichtung gemäß Figur 1 eine sichere und verlässliche Darstellung der infrarot beleuchteten Umgebung ermöglicht, ohne dass es zu einer vollständigen Unterdrückung gerade der sonstigen selbst leuchtenden Elemente in der Umgebung, welche für das Führen eines Fahrzeugs von Bedeutung sind, kommt. Dies ist durch die Ausbildung des ringförmigen Bereiches 8d im Randbereich des Filters 5 mit einfachen technischen Mitteln erreicht. Auf das Vorsehen von aufwendigen oder zusätzlichen technischen Vorkehrungen kann hierdurch weitgehend verzichtet werden.

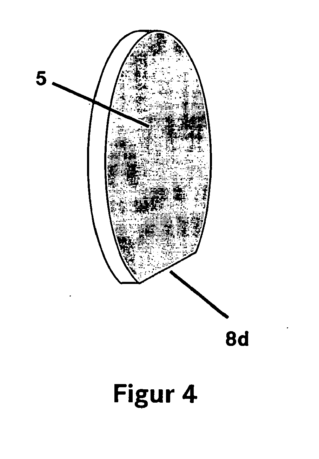

Eine besonders fertigungstechnisch einfach und wirksame Ausbildung des erfindungsgemäßen IR-Filters für eine erfindungsgemäße Vorrichtung zur Verbesserung der Sicht in einem Kraftfahrzeug ist in Figur 4 dargestellt. Ein scheibenförmiger IR-Filter 5 mit einem typischen Transmissionsverlauf wurde in seinem Randbereich so abgeschliffen, dass ein Kreisabschnitt 8e des scheibenförmigen Filters entfernt wurde. Damit hat die Ausnehmung 8d die Form eines Kreissegmentes erhalten. Durch sie kann das sichtbare Licht ungehindert in Richtung Objektiv der Kamera hindurchdringen und durch die Kamera 2 erfasst werden kann. Hierdurch ist sichergestellt, dass auf sehr einfache und kostengünstige Weise sichtbares Licht erfasst und wichtige Verkehrsinformationen im sichtbaren Lichtbereich nicht weggefiltert werden.

## Patentansprüche

1. Vorrichtung zur Verbesserung der Sicht in einem Kraftfahrzeug, mit einer Strahlungsquelle zur Beleuchtung der Fahrzeugumgebung mit infraroter Strahlung, einer infrarotempfindlichen Kamera zur Erfassung wenigstens eines Teiles der beleuchteten Fahrzeugumgebung, mit einem der Kamera zugeordneten mit dem Objektiv verbundenen IR-Filter und mit einer Anzeige zur Darstellung der durch die Kamera erfassten Bildinformationen,
wobei der IR-Filter räumliche Bereiche unterschiedlicher Transmissionseigenschaften aufweist, wobei
wenigstens ein räumlicher Bereich des IR-Filters (5) für das sichtbare Licht so stark bedämpft ist, dass es einen Transmissionsgrad von unter 10⁻⁴ für sichtbares Licht aufweist und für die IR-Strahlung nahezu durchlässig ist,
dass wenigstens ein weiterer räumlicher Bereich (8a, 8b, 8c, 8d) des IR-Filters (5) für sichtbares Licht oder Teile davon nahezu durchlässig ist
und dass der IR-Filter (5) im Strahlengang der Vorrichtung so angeordnet ist, dass gleichzeitig durch die unterschiedlichen räumlichen Bereiche des IR-Filters (5) Bildinformationen mittels IR-Strahlung und mittels sichtbaren Licht gemeinsam der Kamera (2) zugeführt werden.

2. Vorrichtung zur Verbesserung der Sicht in einem Kraftfahrzeug nach Anspruch 1,
**dadurch gekennzeichnet,**
**dass** der wenigstens eine für sichtbares Licht oder Teile davon nahezu durchlässige räumliche Bereich (8b, 8c, 8d) im Randbereich des IR-Filters (5) angeordnet ist.

3. Vorrichtung zur Verbesserung der Sicht in einem Kraftfahrzeug nach Anspruch 1,
**dadurch gekennzeichnet,**
**dass** der wenigstens eine für sichtbares Licht oder Teile davon nahezu durchlässige räumliche Bereich (8a) im Zentralbereich des IR-Filters (5) angeordnet ist.

4. Vorrichtung zur Verbesserung der Sicht in einem Kraftfahrzeug nach einem der Ansprüche 2 bis 3,
**dadurch gekennzeichnet,**
**dass** der wenigstens eine für sichtbares Licht oder Teile davon nahezu durchlässige räumliche Bereich (8a, 8b, 8c, 8d) des IR-Filters (5) weniger als 25 % der Fläche des IR-Filters (5) umfasst.

5. Vorrichtung zur Verbesserung der Sicht in einem Kraftfahrzeug nach einem der Ansprüche 2 bis 4,
**dadurch gekennzeichnet,**
**dass** der wenigstens eine für sichtbares Licht oder Teile davon nahezu durchlässige räumliche Bereich (8a, 8b, 8c, 8d) des IR-Filters (5) die Gestalt eines Kreises, eines Sternes, eines Viereckes, eines Kreissegmentes, eines Kreisabschnittes oder eines Ringes aufweist.

6. Vorrichtung zur Verbesserung der Sicht in einem Kraftfahrzeug nach einem der Ansprüche 2 bis 5,
**dadurch gekennzeichnet,**
**dass** der wenigstens eine für sichtbares Licht oder Teile davon nahezu durchlässige räumliche Bereich (8a, 8b, 8c, 8d) des IR-Filters (5) durch ein Loch im IR-Filter (5) oder eine Aussparung in der Beschichtung des IR-Filters (5) gebildet ist.

7. Vorrichtung zur Verbesserung der Sicht in einem Kraftfahrzeug nach einem der vorstehenden Ansprüche,
**dadurch gekennzeichnet,**
**dass** der IR-Filter (5) wenigstens einen räumlichen Bereich mit einem Transmissionsgrad von etwa oder kleiner 10⁻⁵ für sichtbares Licht aufweist.

## Claims

1. Apparatus for improving visibility in a motor vehicle, comprising a radiation source for illuminating the area surrounding the vehicle with infrared radiation, an infrared-sensitive camera for detecting at least one part of the illuminated area surrounding the vehicle, comprising an IR filter, which is assigned to the camera and connected to the objective, and comprising a display for displaying the image information detected by the camera,
wherein the IR filter has spatial regions with different transmission characteristics,
wherein in at least one spatial region of the IR filter (5), visible light is attenuated to such a degree that it has a transmissivity of less than 10⁻⁴ for visible light and is nearly transparent to IR radiation,
wherein at least one further spatial region (8a, 8b, 8c, 8d) of the IR filter (5) is nearly transparent to visible light or components thereof
and wherein the IR filter (5) is arranged in the beam path of the apparatus such that the different spatial regions of the IR filter (5) feed image information to the camera (2) both using IR radiation and using visible light.

2. Apparatus for improving visibility in a motor vehicle according to Claim 1, **characterized in that** the at least one spatial region (8b, 8c, 8d), which is nearly transparent to visible light or components thereof, is arranged in the edge region of the IR filter (5).

3. Apparatus for improving visibility in a motor vehicle according to Claim 1, **characterized in that** the at least one spatial region (8a), which is nearly transparent to visible light or components thereof, is arranged in the central region of the IR filter (5).

4. Apparatus for improving visibility in a motor vehicle according to either of Claims 2 or 3, **characterized in that** the at least one spatial region (8a, 8b, 8c, 8d), which is nearly transparent to visible light or components thereof, of the IR filter (5) covers less than 25% of the area of the IR filter (5).

5. Apparatus for improving visibility in a motor vehicle according to one of Claims 2 to 4, **characterized in that** the at least one spatial region (8a, 8b, 8c, 8d), which is nearly transparent to visible light or components thereof, of the IR filter (5) has the shape of a circle, a star, a quadrilateral, a segment of a circle, a portion of a circle or a ring.

6. Apparatus for improving visibility in a motor vehicle according to one of Claims 2 to 5, **characterized in that** the at least one spatial region (8a, 8b, 8c, 8d), which is nearly transparent to visible light or components thereof, of the IR filter (5) is formed by a hole in the IR filter (5) or a cutout in the coating of the IR filter (5).

7. Apparatus for improving visibility in a motor vehicle according to one of the preceding claims, **characterized in that** the IR filter (5) has at least one spatial region with a transmissivity of about or less than 10⁻⁵ for visible light.

## Revendications

1. Dispositif d'amélioration de la vision dans un véhicule automobile, qui présente une source de rayonnement qui éclaire l'environnement du véhicule par un rayonnement infrarouge, une caméra sensible à l'infrarouge qui détecte au moins une partie de l'environnement éclairé du véhicule, un filtre IR associé à la caméra et relié à l'objectif et un affichage qui affiche les informations d'image saisies par la caméra, le filtre IR présentant des parties spatiales qui ont des propriétés de transmission différentes,
au moins une partie spatiale du filtre IR (5) atténuant la lumière visible suffisamment fortement pour avoir un degré de transmission de la lumière visible inférieur à 10⁻⁴ et étant presque transparent pour le rayonnement IR,
au moins une partie spatiale (8a, 8b, 8c, 8d) du filtre IR (5) étant presque transparente à la lumière visible ou à des parties de celle-ci,
et le filtre IR (5) est disposé dans le parcours des rayons du dispositif de telle sorte que les différentes parties spatiales du filtre IR (5) transmettent en commun à la caméra (2) des informations d'image obtenues par irradiation par IR et par la lumière visible.

2. Dispositif d'amélioration de la vision dans un véhicule automobile selon la revendication 1,
**caractérisé en ce que** la ou les parties spatiales (8b, 8c, 8d) presque transparentes à la lumière visible ou à des parties de celle-ci sont disposées dans la bordure du filtre IR (5).

3. Dispositif d'amélioration de la vision dans un véhicule automobile selon la revendication 1, **caractérisé en ce que** la ou les parties spatiales (8a) presque transparentes à la lumière visible ou à des parties de celle-ci sont disposées dans la partie centrale du filtre IR (5).

4. Dispositif d'amélioration de la vision dans un véhicule automobile selon l'une des revendications 2 à 3, **caractérisé en ce que** la ou les parties spatiales (8a, 8b, 8c, 8d) du filtre IR (5) presque transparentes à la lumière visible ou à des parties de celle-ci représentent moins de 25 % de la surface du filtre IR (5).

5. Dispositif d'amélioration de la vision dans un véhicule automobile selon l'une des revendications 2 à 4, **caractérisé en ce que** la ou les parties spatiales (8a, 8b, 8c, 8d) du filtre IR (5) presque transparentes à la lumière visible ou à des parties de celle-ci présentent la forme d'un cercle, d'une étoile d'un rectangle, d'un segment de cercle, d'une partie de cercle ou d'un anneau.

6. Dispositif d'amélioration de la vision dans un véhicule automobile selon l'une des revendications 2 à 5, **caractérisé en ce que** la ou les parties spatiales (8a, 8b, 8c, 8d) du filtre IR (5) presque transparentes à la lumière visible ou à des parties de celle-ci sont formées par un trou ménagé dans le filtre IR (5) ou par une découpe ménagée dans le revêtement du filtre IR (5).

7. Dispositif d'amélioration de la vision dans un véhicule automobile selon l'une des revendications précédentes, **caractérisé en ce que** le filtre IR (5) présente au moins une partie spatiale dont le degré de transmission de la lumière visible est sensiblement égal ou inférieur à 10⁻⁵.
